# EUROPÄISCHE PATENTANMELDUNG

(11) **EP 4 817 843 A1**
(43) Veröffentlichungstag der Anmeldung: **07.10.2026**
(21) Anmeldenummer: 25167528.6
(22) Anmeldetag: 31.03.2025
(51) Int. Cl.: B29C 48/285, B29C 48/29, B29C 48/39, B29B 7/60, B29C 48/76, B29B 7/84, B29B 7/48, B29C 48/57, B29K 69/00

(54) **VERFAHREN UND AUFBEREITUNGSANLAGE ZUM AUFBEREITEN EINER POLYMER-ZUSAMMENSETZUNG**

(71) Anmelder: Coperion GmbH, 70469 Stuttgart (DE); EPC Engineering & Technologies GmbH, 99310 Arnstadt (DE)
(72) Erfinder: Lechner, Frank, 71636 Ludwigsburg (DE); Streng, Michael, 63477 Maintal (DE)
(74) Vertreter: Rau, Schneck & Hübner Patentanwälte Rechtsanwälte PartGmbB

(57) **Zusammenfassung**

Bei einem Verfahren und einer Aufbereitungsanlage (1) zum Aufbereiten einer Polymer-Zusammensetzung (C) wird mindestens ein Polymer (P) und/oder mindestens ein Additiv (A) durch eine erste Zuführöffnung (40) und eine Polycarbonat-Schmelze (S_{PC}) durch eine zweite Zuführöffnung (46) in eine Schneckenmaschine (2) zugeführt. Das mindestens eine Polymer (P) und/oder das mindestens eine Additiv (A) und die Polycarbonat-Schmelze (S_{PC}) werden mittels der Schneckenmaschine (2) zu der Polymer-Zusammensetzung (C) homogenisiert und anschließend aus der Schneckenmaschine (2) ausgetragen.

## Beschreibung

Die Erfindung betrifft ein Verfahren und eine Aufbereitungsanlage zum Aufbereiten einer Polymer-Zusammensetzung, die Polycarbonat und mindestens ein Polymer und/oder mindestens ein Additiv umfasst.

Aus der EP 1 222 231 B1 ist ein Verfahren und eine Vorrichtung zum kontinuierlichen Herstellen eines thermoplastischen Polymerblends bekannt. Das Polymerblend umfasst Polycarbonat und mindestens eine weitere Blendkomponente, wie beispielsweise Polybutylenterephthalat. Eine Polycarbonat-Schmelze wird mittels einer Schmelzepumpe direkt aus einer Anlage zur Herstellung von Polycarbonat zu einer statischen Mischstrecke gefördert. Eine weitere Blendkomponente wird mittels eines Extruders aufbereitet und in der statischen Mischstrecke mit der Polycarbonat-Schmelze vermischt. Die Mischung aus der Polycarbonat-Schmelze und der aufgeschmolzenen weiteren Blendkomponente wird anschließend granuliert.

Der Erfindung liegt die Aufgabe zugrunde, ein Verfahren zu schaffen, das ein einfaches und flexibles Aufbereiten einer Polymer-Zusammensetzung, die Polycarbonat und mindestens ein Polymer und/oder mindestens ein Additiv umfasst, mit einer hohen Qualität ermöglicht.

Diese Aufgabe wird durch ein Verfahren mit den Merkmalen des Anspruchs 1 gelöst. Das Verfahren dient zum kontinuierlichen Aufbereiten der Polymer-Zusammensetzung. Mittels der Schneckenmaschine wird insbesondere das mindestens eine Polymer aufgeschmolzen und aufbereitet. Dadurch, dass die Polycarbonat-Schmelze in die Schneckenmaschine zugeführt wird, ist das Homogenisieren des mindestens einen Polymers und/oder des mindestens einen Additivs und der Polycarbonat-Schmelze einfach und effektiv. Das verbesserte Homogenisieren führt zu einer höheren Qualität der Polymer-Zusammensetzung. Durch das verbesserte Homogenisieren können die Anteile des mindestens einen Polymers und/oder des mindestens einen Additivs und der Polycarbonat-Schmelze sowie das mindestens eine Polymer und/oder das mindestens eine Additiv selbst flexibel gewählt werden, ohne dass die Qualität der Polymer-Zusammensetzung beeinträchtigt wird. Darüber hinaus ist der Aufbau der Aufbereitungsanlage vereinfacht, da ein statischer Mischer nicht erforderlich ist.

Das mindestens eine Polymer ist insbesondere ausgewählt aus der Gruppe Acrylnitril-Butadien-Styrol (ABS), Styrol-Acrylnitril (SAN), Polyethylenterephthalat (PET) und Poly-butylenterephthalat (PBT). Das mindestens eine Polymer ist nicht Polycarbonat.

Für einen Anteil w_{PC} der Polycarbonat-Schmelze bezogen auf die Polymer-Zusammensetzung gilt insbesondere: 30 Gew.-% ≤ w_{PC} ≤ 90 Gew.-%, insbesondere 40 Gew.-% ≤ w_{PC} ≤ 80 Gew.-% und insbesondere 50 Gew.-% ≤ w_{PC} ≤ 70 Gew.-%.

Für einen Anteil w_{P} des mindestens einen Polymers bezogen auf die Polymer-Zusammensetzung gilt insbesondere: 10 Gew.-% ≤ w_{P} ≤ 70 Gew.-%, insbesondere 20 Gew.-% ≤ w_{P} ≤ 60 Gew.-%, und insbesondere 30 Gew.-% ≤ w_{P} ≤ 50 Gew.-%.

Wird als Polymer Acrylnitril-Butadien-Styrol (ABS) verwendet, so gilt für den Anteil w_{PC} der Polycarbonat-Schmelze beispielsweise: 30 Gew.-% ≤ w_{PC} ≤ 70 Gew.-%, insbesondere 40 Gew.-% ≤ w_{PC} ≤ 60 Gew.-%. Für einen Anteil w_{ABS} des Acrylnitril-Butadien-Styrols gilt beispielsweise: 30 Gew.-% ≤ w_{ABS} ≤ 70 Gew.-%, insbesondere 40 Gew.-% ≤ w_{ABS} ≤ 60 Gew.-%.

Das mindestens eine Additiv ist insbesondere ausgewählt aus der Gruppe UV-Stabilisator, Wärme-Stabilisator, Sauerstofffänger, Trennmittel (Mold Release: MR), Farbstoff und Füllstoff. Als Füllstoff dient/dienen insbesondere Talkum und/oder Fasern, wie beispielsweise Glasfasern und/oder Kohlefasern.

Ist das mindestens eine Additiv ausgewählt aus der Gruppe UV-Stabilisator, Wärme-Stabilisator, Sauerstofffänger, Trennmittel (Mold Release: MR) und Farbstoff, so gilt für einen Anteil w_{A} des mindestens einen Additivs bezogen auf die Polymer-Zusammensetzung insbesondere: 0,0001 Gew.-% ≤ w_{A} ≤ 2,5 Gew.-%, insbesondere 0,0005 Gew.-% ≤ w_{A} ≤ 1,5 Gew.-%, und insbesondere 0,0005 Gew.-% ≤ w_{A} ≤ 1 Gew.-%.

Ist das mindestens eine Additiv ein Füllstoff, so gilt für einen Anteil w_{A} des mindestens einen Additivs bezogen auf die Polymer-Zusammensetzung insbesondere: 1 Gew.-% ≤ w_{A} ≤ 80 Gew.-%, insbesondere 10 Gew.-% ≤ w_{A} ≤ 70 Gew.-%, und insbesondere 20 Gew.-% ≤ w_{A} ≤ 40 Gew.-%.

Beim Zuführen der Polycarbonat-Schmelze durch die zweite Zuführöffnung in die Schneckenmaschine hat die Polycarbonat-Schmelze eine Temperatur T_{PC}, wobei insbesondere gilt: 270°C ≤ T_{PC} ≤ 330°C, insbesondere 280°C ≤ T_{PC} ≤ 320°C, und insbesondere 290°C ≤ T_{PC} ≤ 310°C.

Die Schneckenmaschine umfasst mindestens eine Behandlungselementwelle. Die Schneckenmaschine ist insbesondere eine Mehrwellen-Schneckenmaschine, vorzugsweise eine Zweiwellen-Schneckenmaschine. Die Mehrwellen-Schneckenmaschine umfasst insbesondere mindestens zwei Behandlungselementwellen. Die mindestens zwei Behandlungselementwellen sind vorzugsweise gleichsinnig rotierend.

Die Mehrwellen-Schneckenmaschine umfasst insbesondere ein Gehäuse, in dem mindestens zwei Gehäusebohrungen ausgebildet sind. In den mindestens zwei Gehäusebohrungen ist jeweils eine Behandlungselementwelle drehbar bzw. drehantreibbar angeordnet. Die mindestens zwei Behandlungselementwellen sind vorzugsweise gleichsinnig rotierend, also in gleichen Drehrichtungen drehantreibbar. Die erste Zuführöffnung und die zweite Zuführöffnung sind in dem Gehäuse ausgebildet und münden in die mindestens zwei Gehäusebohrungen.

Die Schneckenmaschine definiert eine Förderrichtung. Die zweite Zuführöffnung ist in der Förderrichtung insbesondere stromabwärts zu der ersten Zuführöffnung angeordnet. Die Polycarbonat-Schmelze wird vorzugsweise unmittelbar aus einer Herstellungsvorrichtung durch die zweite Zuführöffnung in die Schneckenmaschine zugeführt. Nach dem Austragen der Polymer-Zusammensetzung aus der Schneckenmaschine wird die Polymer-Zusammensetzung insbesondere gefiltert und/oder granuliert.

Ein Verfahren nach Anspruch 2 gewährleistet ein einfaches und flexibles Aufbereiten der Polymer-Zusammensetzung mit einer hohen Qualität. Das Schüttgut besteht aus Feststoffpartikeln, insbesondere aus Granulat und/oder Pulver. Dadurch, dass das mindestens eine Polymer als Schüttgut vorliegt, kann das mindestens eine Polymer einfach und flexibel in die Schneckenmaschine zugeführt und in der Schneckenmaschine aufgeschmolzen werden. Hierzu bildet die Schneckenmaschine in einer Förderrichtung nacheinander eine Zuführzone zum Zuführen des mindestens einen Polymers und eine Aufschmelzzone zum Aufschmelzen des mindestens einen Polymers aus. Das mindestens eine Polymer wird mittels der Schneckenmaschine zu einer Polymer-Schmelze aufgeschmolzen. Die Polycarbonat-Schmelze wird insbesondere in das zumindest teilweise aufgeschmolzene mindestens eine Polymer zugeführt. Vorzugsweise ist bei Zuführung der Polycarbonat-Schmelze ein Anteil des mindestens einen Polymers von mindestens 30 Gew.-%, insbesondere von mindestens 50 Gew.-%, und insbesondere von mindestens 70 Gew.-% aufgeschmolzen. Vorzugsweise ist bei Zuführung der Polycarbonat-Schmelze ein Anteil des mindestens einen Polymers von höchstens 95 Gew.-%, insbesondere von höchstens 85 Gew.-%, und insbesondere von höchstens 75 Gew.-% aufgeschmolzen. Hierdurch kann die thermische Energie der Polycarbonat-Schmelze zumindest teilweise zum Aufschmelzen des mindestens einen Polymers genutzt werden. Alternativ kann das mindestens eine Polymer bei Zuführung der Polycarbonat-Schmelze auch vollständig aufgeschmolzen sein.

Ein Verfahren nach Anspruch 3 gewährleistet ein einfaches und flexibles Aufbereiten der Polymer-Zusammensetzung mit einer hohen Qualität. Mittels der ersten Zuführeinrichtung kann das mindestens eine Polymer und/oder das mindestens eine Additiv einfach, exakt und zuverlässig in die Schneckenmaschine zugeführt werden. Vorzugsweise umfasst die erste Zuführeinrichtung mindestens einen Dosierer und/oder eine Zuführschneckenmaschine. Vorzugsweise weist die erste Zuführeinrichtung mindestens einen ersten Dosierer zum Zuführen des mindestens einen Polymers und/oder mindestens einen zweiten Dosierer zum Zuführen des mindestens einen Additivs auf. Werden mehrere Polymere zugeführt, weist die erste Zuführeinrichtung insbesondere für jedes zuzuführende Polymer einen Dosierer auf. Werden mehrere Additive zugeführt, weist die erste Zuführeinrichtung insbesondere für jedes zuzuführende Additiv einen Dosierer auf. Der mindestens eine Dosierer ist gravimetrisch und/oder volumetrisch ausgebildet. Vorzugsweise dosiert der mindestens eine Dosierer das mindestens eine Polymer und/oder das mindestens eine Additiv in die Zuführschneckenmaschine, die das mindestens eine Polymer und/oder das mindestens eine Additiv in die Schneckenmaschine fördert. Die Zuführschneckenmaschine umfasst insbesondere zwei Förderschneckenwellen, ist also zweiwellig ausgebildet. Vorzugsweise ist die Zuführschneckenmaschine als Seitenbeschickungsmaschine ausgebildet, die seitlich an ein Gehäuse der Schneckenmaschine angeschlossen ist.

Ein Verfahren nach Anspruch 4 gewährleistet ein einfaches und flexibles Aufbereiten der Polymer-Zusammensetzung mit einer hohen Qualität. Mittels der zweiten Zuführeinrichtung kann die Polycarbonat-Schmelze einfach, exakt und zuverlässig in die Schneckenmaschine zugeführt werden. Die zweite Zuführeinrichtung umfasst insbesondere eine Schmelzepumpe und/oder eine Zuführschneckenmaschine. Vorzugsweise wird die Polycarbonat-Schmelze mittels einer Schmelzepumpe aus einer Herstellungsvorrichtung über eine Förderleitung durch die zweite Zuführöffnung in die Schneckenmaschine zugeführt.

Ein Verfahren nach Anspruch 5 gewährleistet ein einfaches und flexibles Aufbereiten der Polymer-Zusammensetzung mit einer hohen Qualität. Die Aufbereitungsanlage umfasst eine Herstellungsvorrichtung zur Herstellung der Polycarbonat-Schmelze. Die Herstellungsvorrichtung umfasst insbesondere mindestens einen Reaktor zur Herstellung der Polycarbonat-Schmelze, insbesondere nach dem phosgenfreien Umesterungsverfahren durch eine Umesterung von Kohlensäureestern mit Dihydroxyverbindungen. Die Polycarbonat-Schmelze wird insbesondere mittels einer zweiten Zuführeinrichtung über eine Förderleitung direkt aus der Herstellungsvorrichtung in die Schneckenmaschine zugeführt. Die Schneckenmaschine bildet eine Zuführzone zum Zuführen der Polycarbonat-Schmelze aus, die in einer Förderrichtung stromabwärts zu einer Zuführzone zum Zuführen des mindestens einen Polymers und/oder des mindestens einen Additivs und gegebenenfalls einer Aufschmelzzone zum Aufschmelzen des mindestens einen Polymers angeordnet ist.

Ein Verfahren nach Anspruch 6 gewährleistet ein einfaches und flexibles Aufbereiten der Polymer-Zusammensetzung mit einer hohen Qualität. Durch das Entgasen können unerwünschte flüchtige Bestandteile aus dem zumindest teilweise aufgeschmolzenen mindestens einen Polymer und/oder der Polycarbonat-Schmelze entfernt werden. Vorzugsweise weist die Schneckenmaschine mindestens eine Entgasungsöffnung auf. Die mindestens eine Entgasungsöffnung ist in einem Gehäuse der Schneckenmaschine ausgebildet. Die Schneckenmaschine bildet insbesondere eine Homogenisierungszone aus, die in einer Förderrichtung nach einer Zuführzone zum Zuführen des mindestens einen Polymers und/oder des mindestens einen Additivs angeordnet ist. Vorzugsweise ist die Homogenisierungszone in der Förderrichtung nach einer Aufschmelzzone zum Aufschmelzen des mindestens einen Polymers und einer Zuführzone zum Zuführen der Polycarbonat-Schmelze angeordnet. Die mindestens eine Entgasungsöffnung ist insbesondere in der Homogenisierungszone angeordnet. Das Entgasen erfolgt insbesondere während des Homogenisierens. Vorzugsweise wird die zumindest teilweise homogenisierte Polymer-Zusammensetzung entgast. Die mindestens eine Entgasungsöffnung ist insbesondere in der Förderrichtung nach der zweiten Zuführöffnung angeordnet. Die mindestens eine Entgasungsöffnung ist insbesondere an eine Entgasungseinrichtung angeschlossen. Die Entgasungseinrichtung erzeugt vorzugsweise zum Entgasen einen Unterdruck. Vorzugsweise erfolgt das Entgasen nach der Zuführung eines Schleppmittels. Als Schleppmittel dient beispielsweise Wasser. Die Schneckenmaschine weist insbesondere eine Schleppmittel-Zuführöffnung auf, die in einem Gehäuse der Schneckenmaschine ausgebildet ist. Die Schleppmittel-Zuführöffnung ist in der Förderrichtung stromaufwärts zu der mindestens einen Entgasungsöffnung angeordnet. Vorzugsweise ist die Schleppmittel-Zuführöffnung zwischen der zweiten Zuführöffnung zum Zuführen der Polycarbonat-Schmelze und der mindestens einen Entgasungsöffnung angeordnet. Durch das Entgasen kann der Anteil an Diphenylcarbazid (DPC) und/oder an Acetonitril (ACN) auf weniger als 100 ppm, insbesondere weniger als 50 ppm und insbesondere weniger als 10 ppm reduziert werden. Die Angabe ppm (parts per million) bezieht sich auf die Menge der Moleküle bzw. Monomere des Diphenylcarbazid (DPC) und/oder des Acetonitril (ACN), die in ihrer Gesamtheit in der Polymer-Zusammensetzung enthalten ist.

Ein Verfahren nach Anspruch 7 gewährleistet ein einfaches und flexibles Aufbereiten der Polymer-Zusammensetzung mit einer hohen Qualität. Zumindest ein Teil des mindestens einen Additivs wird mittels einer dritten Zuführeinrichtung in die Schneckenmaschine zugeführt. Die dritte Zuführeinrichtung mündet in eine dritte Zuführöffnung der Schneckenmaschine. Die dritte Zuführöffnung ist in einer Förderrichtung der Schneckenmaschine stromaufwärts oder stromabwärts zu der zweiten Zuführöffnung angeordnet. Die dritte Zuführeinrichtung umfasst mindestens einen Dosierer und/oder eine Zuführschneckenmaschine. Vorzugsweise umfasst die dritte Zuführeinrichtung bei der Zuführung mehrerer Additive für jedes Additiv einen Dosierer. Der mindestens eine Dosierer dosiert das mindestens eine Additiv insbesondere in die Zuführschneckenmaschine, die das mindestens eine Additiv in die Schneckenmaschine fördert. Der mindestens eine Dosierer ist insbesondere gravimetrisch und/oder volumetrisch ausgebildet. Die Zuführschneckenmaschine umfasst insbesondere zwei Förderschneckenwellen, ist also zweiwellig ausgebildet. Vorzugsweise ist die Zuführschneckenmaschine als Seitenbeschickungsmaschine ausgebildet und seitlich an ein Gehäuse der Schneckenmaschine angeschlossen. Die dritte Zuführöffnung ist insbesondere in der Förderrichtung stromabwärts zu der ersten Zuführöffnung und/oder der zweiten Zuführöffnung und/oder stromaufwärts zu mindestens einer Entgasungsöffnung angeordnet. Die dritte Zuführöffnung ist vorzugsweise seitlich in einem Gehäuse der Schneckenmaschine ausgebildet.

Der Erfindung liegt ferner die Aufgabe zugrunde, eine Aufbereitungsanlage zu schaffen, die ein einfaches und flexibles Aufbereiten einer Polymer-Zusammensetzung, die Polycarbonat und mindestens ein Polymer und/oder mindestens ein Additiv umfasst, mit einer hohen Qualität ermöglicht.

Diese Aufgabe wird durch eine Aufbereitungsanlage mit den Merkmalen des Anspruchs 8 gelöst. Die Aufbereitungsanlage dient zum kontinuierlichen Aufbereiten einer Polymer-Zusammensetzung, die Polycarbonat und mindestens ein Polymer und/oder mindestens ein Additiv umfasst. Durch die erste Zuführöffnung wird das mindestens eine Polymer und/oder das mindestens eine Additiv in eine erste Zuführzone der Schneckenmaschine zugeführt. Durch die zweite Zuführöffnung wird die Polycarbonat-Schmelze in eine zweite Zuführzone in die Schneckenmaschine zugeführt. Vorzugsweise ist die zweite Zuführöffnung in einer Förderrichtung der Schneckenmaschine stromabwärts zu der ersten Zuführöffnung bzw. die zweite Zuführzone in der Förderrichtung stromabwärts zu der ersten Zuführzone angeordnet. In der Homogenisierungszone wird das mindestens eine Polymer und/oder das mindestens eine Additiv und die Polycarbonat-Schmelze zu der Polymer-Zusammensetzung homogenisiert. Die Homogenisierungszone ist in der Förderrichtung stromabwärts zu der ersten Zuführöffnung und der zweiten Zuführöffnung bzw. stromabwärts zu der ersten Zuführzone und der zweiten Zuführzone angeordnet. Vorzugsweise umfasst die Schneckenmaschine in der Förderrichtung nacheinander die erste Zuführzone, eine Aufschmelzzone, die zweite Zuführzone, die Homogenisierungszone und eine Austragszone.

Die Schneckenmaschine umfasst mindestens eine Behandlungselementwelle. In der Homogenisierungszone umfasst die mindestens eine Behandlungselementwelle mindestens ein Knetelement und/oder mindestens ein Mischelement. Das mindestens eine Knetelement ist insbesondere als Knetscheibe und/oder als Knetblock ausgebildet, der mehrere einteilig miteinander verbundene Knetscheiben umfasst. Das mindestens eine Mischelement ist insbesondere ein Zahnmischelement und/oder ein Turbinenmischelement. Das mindestens eine Mischelement kann fördernd und/oder förderneutral ausgebildet sein. Das mindestens eine Mischelement dient insbesondere zum distributiven Vermischen. Das mindestens eine Mischelement vermeidet insbesondere eine intensive Scherung. Die Homogenisierungszone beginnt mit dem ersten Knetelement oder dem ersten Mischelement nach einer Zuführzone zum Zuführen der Polycarbonat-Schmelze und endet bei dem letzten Knetelement oder dem letzten Mischelement der mindestens einen Behandlungselementwelle.

Die mindestens eine Behandlungselementwelle hat einen Außendurchmesser D. Für eine Länge L_{H} der Homogenisierungszone gilt insbesondere: 4 ≤ L_{H} /D ≤ 16, insbesondere 5 ≤ L_{H} /D ≤ 15, und insbesondere 6 ≤ L_{H} /D ≤ 14.

Die Schneckenmaschine ist insbesondere eine Mehrwellen-Schneckenmaschine, vorzugsweise eine Zweiwellen-Schneckenmaschine. Die Mehrwellen-Schneckenmaschine umfasst insbesondere mindestens zwei Behandlungselementwellen. Die mindestens zwei Behandlungselementwellen sind vorzugsweise gleichsinnig rotierend.

Die Mehrwellen-Schneckenmaschine umfasst insbesondere ein Gehäuse, in dem mindestens zwei Gehäusebohrungen ausgebildet sind. In den mindestens zwei Gehäusebohrungen ist jeweils eine Behandlungselementwelle drehbar bzw. drehantreibbar angeordnet. Die mindestens zwei Behandlungselementwellen sind vorzugsweise gleichsinnig rotierend, also in gleichen Drehrichtungen drehantreibbar. Die erste Zuführöffnung und die zweite Zuführöffnung sind in dem Gehäuse ausgebildet und münden in die mindestens zwei Gehäusebohrungen.

Die Aufbereitungsanlage umfasst insbesondere eine Filtereinrichtung und/oder eine Granuliereinrichtung, die in der Förderrichtung nach der Schneckenmaschine angeordnet ist. Vorzugsweise ist nach der Schneckenmaschine eine Filtereinrichtung zum Filtern der Polymer-Zusammensetzung und eine Granuliereinrichtung zum Herstellen von Granulat aus der gefilterten Polymer-Zusammensetzung angeordnet.

Die Vorteile der erfindungsgemäßen Aufbereitungsanlage entsprechen den bereits beschriebenen Vorteilen des erfindungsgemäßen Verfahrens. Die Aufbereitungsanlage kann insbesondere mit mindestens einem Merkmal weitergebildet werden, das im Zusammenhang mit dem erfindungsgemäßen Verfahren beschrieben ist.

Eine Aufbereitungsanlage nach Anspruch 9 gewährleistet ein einfaches und flexibles Aufbereiten der Polymer-Zusammensetzung mit einer hohen Qualität. In der Aufschmelzzone wird das als Schüttgut zugeführte mindestens eine Polymer zumindest teilweise aufgeschmolzen. Die Aufschmelzzone ist in einer Förderrichtung der Schneckenmaschine stromaufwärts zu der zweiten Zuführöffnung bzw. der zweiten Zuführzone angeordnet. Hierdurch wird die Polycarbonat-Schmelze in das zumindest teilweise aufgeschmolzene mindestens eine Polymer zugeführt.

In der Aufschmelzzone umfasst die mindestens eine Behandlungselementwelle mindestens ein Knetelement. Das mindestens eine Knetelement ist insbesondere als Knetscheibe und/oder als Knetblock ausgebildet, der mehrere einteilig miteinander verbundene Knetscheiben umfasst. Die Aufschmelzzone beginnt bei dem ersten Knetelement der mindestens einen Behandlungselementwelle und endet bei einer nächstgelegenen und stromabwärts angeordneten Zuführöffnung, beispielsweise der zweiten Zuführöffnung zum Zuführen der Polycarbonat-Schmelze oder einer dritten Zuführöffnung zum Zuführen mindestens eines Additivs. Die mindestens eine Behandlungselementwelle hat einen Außendurchmesser D. Für eine Länge L_{A} der Aufschmelzzone in der Förderrichtung gilt insbesondere: 4 ≤ L_{A}/D ≤ 12, insbesondere 5 ≤ L_{A}/D ≤ 11, und insbesondere 6 ≤ L_{A}/D ≤ 10.

Eine Aufbereitungsanlage nach Anspruch 10 gewährleistet ein einfaches und flexibles Aufbereiten der Polymer-Zusammensetzung mit einer hohen Qualität. Mittels der Entgasungseinrichtung können unerwünschte flüchtige Bestandteile, die beim Aufbereiten der Polymer-Zusammensetzung entstehen, aus der Schneckenmaschine entfernt werden. Die Entgasung kann atmosphärisch oder mittels eines erzeugten Unterdrucks erfolgen. Vorzugsweise umfasst die Entgasungseinrichtung einen Unterdruckerzeuger. Die Entgasungseinrichtung ist an mindestens eine Entgasungsöffnung angeschlossen, die in einem Gehäuse der Schneckenmaschine ausgebildet ist. Die mindestens eine Entgasungsöffnung ist insbesondere in einer Aufschmelzzone und/oder einer Zuführzone zum Zuführen der Polycarbonat-Schmelze und/oder in einer Homogenisierungszone angeordnet. Die mindestens eine Entgasungsöffnung ist insbesondere in einer Förderrichtung stromabwärts zu der ersten Zuführöffnung und/oder zu der zweiten Zuführöffnung angeordnet.

Vorzugsweise umfasst die Schneckenmaschine eine Schleppmittel-Zuführeinrichtung zum Zuführen von Schleppmittel. Die Schleppmittel-Zuführeinrichtung ist insbesondere an eine Schleppmittel-Zuführöffnung angeschlossen, die in dem Gehäuse der Schneckenmaschine ausgebildet ist. Die Schleppmittel-Zuführöffnung ist in einer Förderrichtung insbesondere stromaufwärts zu der mindestens einen Entgasungsöffnung angeordnet. Die Schleppmittel-Zuführöffnung ist in der Förderrichtung insbesondere stromabwärts zu der ersten Zuführöffnung und/oder der zweiten Zuführöffnung angeordnet.

Eine Aufbereitungsanlage nach Anspruch 11 gewährleistet ein einfaches und flexibles Aufbereiten der Polymer-Zusammensetzung mit einer hohen Qualität. Mittels der ersten Zuführeinrichtung kann das mindestens eine Polymer und/oder das mindestens eine Additiv einfach, exakt und zuverlässig in die Schneckenmaschine zugeführt werden. Vorzugsweise umfasst die erste Zuführeinrichtung mindestens einen Dosierer und/oder eine Zuführschneckenmaschine. Vorzugsweise weist die erste Zuführeinrichtung mindestens einen ersten Dosierer zum Zuführen des mindestens einen Polymers und/oder mindestens einen zweiten Dosierer zum Zuführen des mindestens einen Additivs auf. Werden mehrere Polymere zugeführt, weist die erste Zuführeinrichtung insbesondere für jedes zuzuführende Polymer einen Dosierer auf. Werden mehrere Additive zugeführt, weist die erste Zuführeinrichtung insbesondere für jedes zuzuführende Additiv einen Dosierer auf. Der mindestens eine Dosierer ist gravimetrisch und/oder volumetrisch ausgebildet. Vorzugsweise dosiert der mindestens eine Dosierer das mindestens eine Polymer und/oder das mindestens eine Additiv in die Zuführschneckenmaschine, die das mindestens eine Polymer und/oder das mindestens eine Additiv in die Schneckenmaschine fördert. Die Zuführschneckenmaschine umfasst insbesondere zwei Förderschneckenwellen, ist also zweiwellig ausgebildet. Vorzugsweise ist die Zuführschneckenmaschine als Seitenbeschickungsmaschine ausgebildet, die seitlich an ein Gehäuse der Schneckenmaschine angeschlossen ist.

Eine Aufbereitungsanlage nach Anspruch 12 gewährleistet ein einfaches und flexibles Aufbereiten der Polymer-Zusammensetzung mit einer hohen Qualität. Mittels der zweiten Zuführeinrichtung kann die Polycarbonat-Schmelze einfach, exakt und zuverlässig in die Schneckenmaschine zugeführt werden. Die zweite Zuführeinrichtung umfasst insbesondere eine Schmelzepumpe und/oder eine Zuführschneckenmaschine. Vorzugsweise wird die Polycarbonat-Schmelze mittels einer Schmelzepumpe aus einer Herstellungsvorrichtung über eine Förderleitung durch die zweite Zuführöffnung in die Schneckenmaschine zugeführt.

Eine Aufbereitungsanlage nach Anspruch 13 gewährleistet ein einfaches und flexibles Aufbereiten der Polymer-Zusammensetzung mit einer hohen Qualität. Die Aufbereitungsanlage umfasst eine Herstellungsvorrichtung zur Herstellung der Polycarbonat-Schmelze. Die Herstellungsvorrichtung umfasst insbesondere mindestens einen Reaktor zur Herstellung der Polycarbonat-Schmelze, insbesondere nach dem phosgenfreien Umesterungsverfahren durch eine Umesterung von Kohlensäureestern mit Dihydroxyverbindungen. Die Polycarbonat-Schmelze wird insbesondere mittels einer zweiten Zuführeinrichtung direkt aus der Herstellungsvorrichtung in die Schneckenmaschine zugeführt. Die Schneckenmaschine bildet eine Zuführzone zum Zuführen der Polycarbonat-Schmelze aus, die in einer Förderrichtung stromabwärts zu einer Zuführzone zum Zuführen des mindestens einen Polymers und/oder des mindestens einen Additivs und gegebenenfalls einer Aufschmelzzone zum Aufschmelzen des mindestens einen Polymers angeordnet ist.

Eine Aufbereitungsanlage nach Anspruch 14 gewährleistet ein einfaches und flexibles Aufbereiten der Polymer-Zusammensetzung mit einer hohen Qualität. Zumindest ein Teil des mindestens einen Additivs wird mittels der dritten Zuführeinrichtung in die Schneckenmaschine zugeführt. Die dritte Zuführeinrichtung mündet in eine dritte Zuführöffnung der Schneckenmaschine. Die dritte Zuführöffnung ist in einer Förderrichtung der Schneckenmaschine stromaufwärts oder stromabwärts zu der zweiten Zuführöffnung angeordnet. Die dritte Zuführeinrichtung umfasst mindestens einen Dosierer und/oder eine Zuführschneckenmaschine. Vorzugsweise umfasst die dritte Zuführeinrichtung bei der Zuführung mehrerer Additive für jedes Additiv einen Dosierer. Der mindestens eine Dosierer dosiert das mindestens eine Additiv insbesondere in die Zuführschneckenmaschine, die das mindestens eine Additiv in die Schneckenmaschine fördert. Der mindestens eine Dosierer ist insbesondere gravimetrisch und/oder volumetrisch ausgebildet. Die Zuführschneckenmaschine umfasst insbesondere zwei Förderschneckenwellen, ist also zweiwellig ausgebildet. Vorzugsweise ist die Zuführschneckenmaschine als Seitenbeschickungsmaschine ausgebildet und seitlich an ein Gehäuse der Schneckenmaschine angeschlossen. Die dritte Zuführöffnung ist insbesondere in der Förderrichtung stromabwärts zu der ersten Zuführöffnung und/oder der zweiten Zuführöffnung und/oder stromaufwärts zu mindestens einer Entgasungsöffnung angeordnet. Die dritte Zuführöffnung ist vorzugsweise seitlich in einem Gehäuse der Schneckenmaschine ausgebildet.

Eine Aufbereitungsanlage nach Anspruch 15 gewährleistet ein einfaches und flexibles Aufbereiten der Polymer-Zusammensetzung mit einer hohen Qualität. Das Verhältnis L/D gewährleistet, dass das mindestens eine Polymer und/oder das mindestens eine Additiv mittels der Schneckenmaschine mit der zugeführten Polycarbonat-Schmelze homogenisiert wird. Insbesondere gewährleistet das Verhältnis L/D, dass das mindestens eine Polymer mittels der Schneckenmaschine aufgeschmolzen wird. Ferner gewährleistet das Verhältnis L/D ein Entgasen des mindestens einen aufgeschmolzenen Polymers und/oder der Polycarbonat-Schmelze.

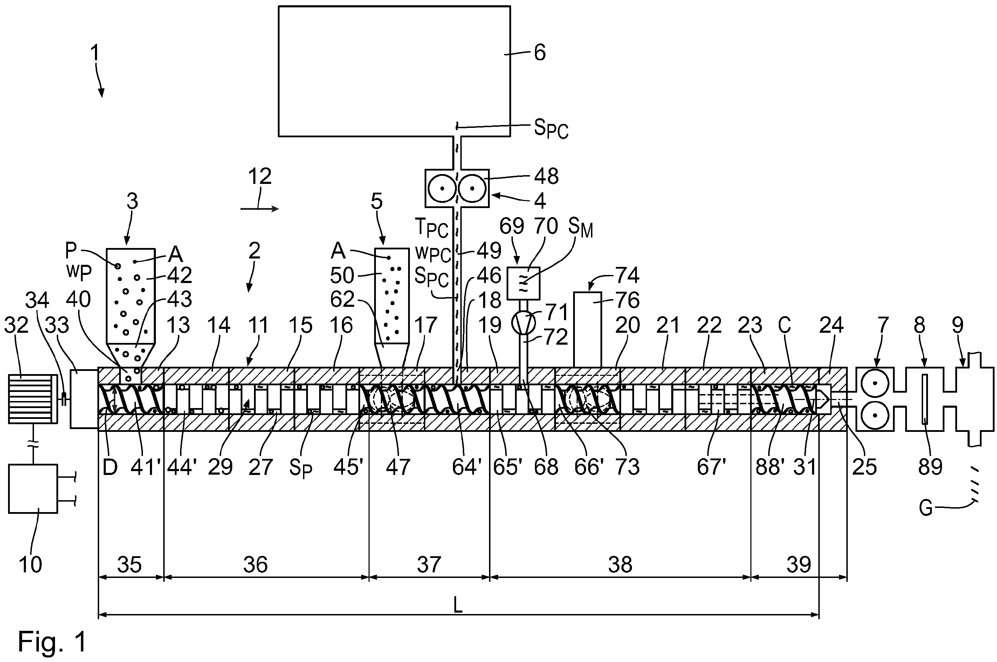

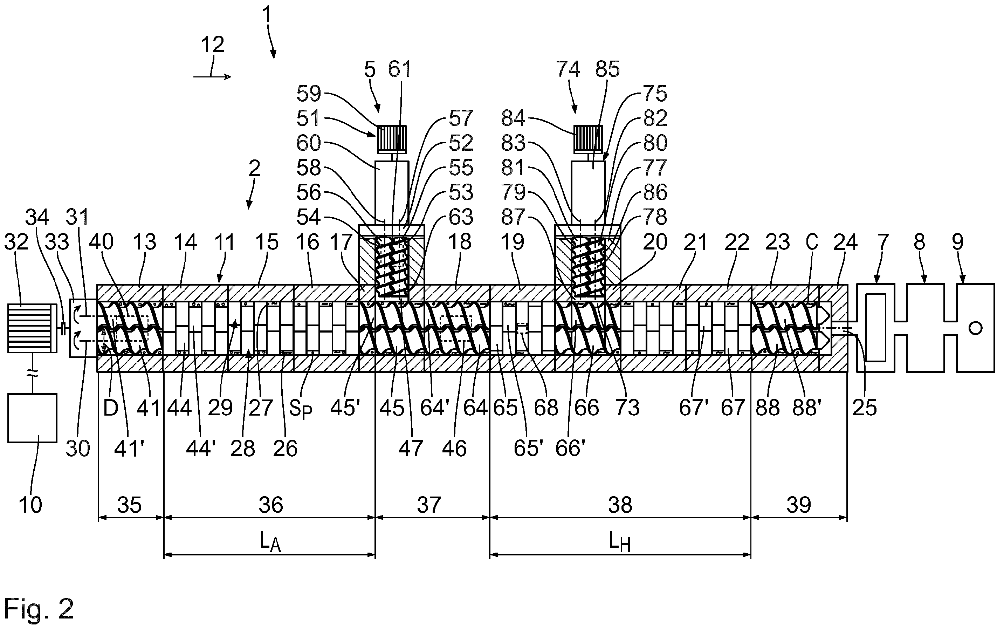

Weitere Merkmale, Vorteile und Einzelheiten der Erfindung ergeben sich aus der nachfolgenden Beschreibung eines Ausführungsbeispiels. Es zeigen:
- Fig. 1: eine teilweise geschnittene Seitenansicht einer Aufbereitungsanlage zum Aufbereiten einer Polymer-Zusammensetzung, die Polycarbonat und mindestens ein Polymer und/oder mindestens ein Additiv umfasst, und
- Fig. 2: eine teilweise geschnittene Draufsicht auf die Aufbereitungsanlage in Fig. 1.
Die in den Figuren 1 und 2 dargestellte Aufbereitungsanlage 1 dient zum kontinuierlichen Aufbereiten einer Polymer-Zusammensetzung C, die Polycarbonat und mindestens ein Polymer P und/oder mindestens ein Additiv A umfasst. Das mindestens eine Polymer P ist insbesondere ausgewählt aus der Gruppe Acrylnitril-Butadien-Styrol (ABS), Styrol-Acrylnitril (ASN), Polyethylenterephthalat (PET) und Polybutylenterephthalat (PBT). Das mindestens eine Polymer P ist nicht Polycarbonat.

Die Aufbereitungsanlage 1 umfasst eine Mehrwellen-Schneckenmaschine 2, eine erste Zuführeinrichtung 3 zum Zuführen des mindestens einen Polymers P und/oder des mindestens einen Additivs A, eine zweite Zuführeinrichtung 4 zum Zuführen einer Polycarbonat-Schmelze S_{PC}, eine dritte Zuführeinrichtung 5 zum Zuführen zumindest einen Teils des mindestens einen Additivs A, eine Herstellungsvorrichtung 6 zum Herstellen der Polycarbonat-Schmelze S_{PC}, eine Druckaufbaueinrichtung 7, eine Filtereinrichtung 8, eine Granuliereinrichtung 9 und eine Steuereinrichtung 10.

Die Mehrwellen-Schneckenmaschine 2 dient zum kontinuierlichen Aufbereiten der Polymer-Zusammensetzung C aus dem mindestens einen Polymer P, der Polycarbonat-Schmelze S_{PC} und dem mindestens einen Additiv A. Die Mehrwellen-Schneckenmaschine 2 ist als gleichläufige Zweiwellen-Schneckenmaschine ausgebildet. Die Mehrwellen-Schneckenmaschine 2 umfasst ein Gehäuse 11, das aus mehreren in einer Förderrichtung 12 nacheinander angeordneten und miteinander verbundenen Gehäuseabschnitten 13 bis 23 aufgebaut ist. Der letzte Gehäuseabschnitt 23 ist durch eine Austragsplatte 24 abgeschlossen. Die Austragsplatte 24 bildet eine Austragsöffnung 25 aus. In dem Gehäuse 11 sind zwei zueinander parallele und einander durchdringende Gehäusebohrungen 26, 27 ausgebildet. Die Gehäusebohrungen 26, 27 haben im Querschnitt die Form einer liegenden Acht.

In den Gehäusebohrungen 26, 27 sind zwei Behandlungselementwellen 28, 29 angeordnet, die um zugehörige Drehachsen 30, 31 in gleichen Drehrichtungen drehantreibbar sind. Zum Drehantreiben umfasst die Mehrwellen-Schneckenmaschine 2 einen Antriebsmotor 32 und ein Verzweigungsgetriebe 33, zwischen denen eine Kupplung 34 angeordnet ist. Die Behandlungselementwellen 28, 29 werden mittels des Antriebsmotors 32 über das Verzweigungsgetriebe 33 in gleichen Drehrichtungen um die Drehachsen 30, 31 drehangetrieben.

Die Mehrwellen-Schneckenmaschine 2 bildet in der Förderrichtung 12 nacheinander eine erste Zuführzone 35, eine Aufschmelzzone 36, eine zweite Zuführzone 37, eine Homogenisierungszone 38 und eine Austragszone 39 aus.

In der ersten Zuführzone 35 ist in dem Gehäuse 11 eine erste Zuführöffnung 40 ausgebildet. Die erste Zuführöffnung 40 ist beispielsweise in dem ersten Gehäuseabschnitt 13 ausgebildet. Die erste Zuführöffnung 40 ist an einer Oberseite des Gehäuses 11 angeordnet und mündet von oben in die Gehäusebohrungen 26, 27. In der ersten Zuführzone 35 umfassen die Behandlungselementwellen 28, 29 Förderelemente 41, 41'.

Die erste Zuführeinrichtung 3 dient zum Zuführen des mindestens einen Polymers P und eines ersten Teils des mindestens einen Additivs A in die erste Zuführzone 35. Die erste Zuführeinrichtung 3 umfasst einen ersten Dosierer 42. Der erste Dosierer 42 ist gravimetrisch oder volumetrisch ausgebildet. Der erste Dosierer 42 mündet in einen Zuführtrichter 43. Der Zuführtrichter 43 mündet wiederum in die erste Zuführöffnung 40. Das mindestens eine Polymer P und der erste Teil des mindestens einen Additivs A kann vorgemischt sein und mittels des ersten Dosierers 42 zugeführt werden. Alternativ kann mittels des ersten Dosierers 42 das mindestens eine Polymer P und mittels mindestens eines weiteren Dosierers der erste Teil des mindestens einen Additivs A zugeführt werden.

Die Aufschmelzzone 36 dient zum Aufschmelzen des mindestens einen Polymers P. Das aufgeschmolzene mindestens eine Polymer P bildet eine Polymer-Schmelze S_{P}. In der Aufschmelzzone 36 umfassen die Behandlungselementwellen 28, 29 Knetelemente 44, 44' und Förderelemente 45, 45'. Die Knetelemente 44, 44' umfassen insbesondere Knetblöcke mit mehreren einteilig miteinander verbundenen Knetscheiben und/oder einzelne Knetscheiben. Die Aufschmelzzone 36 beginnt mit einem in der Förderrichtung 12 ersten Knetelement 44, 44' und endet bei einer dritten Zuführöffnung 47. Die dritte Zuführöffnung 47 ist nachfolgend im Detail erläutert.

Die Behandlungselementwellen 28, 29 haben einen Außendurchmesser D. Der Außendurchmesser D ist insbesondere ein maximaler Außendurchmesser. Die Behandlungselementwellen 28, 29 haben in der Aufschmelzzone 36 eine Länge L_{A}. Für ein Verhältnis L_{A}/D gilt insbesondere: 4 ≤ L_{A}/D ≤ 12, insbesondere 5 ≤ L_{A}/D ≤ 11, und insbesondere 6 ≤ L_{A}/D ≤ 10.

Die Mehrwellen-Schneckenmaschine 2 weist in der zweiten Zuführzone 37 eine zweite Zuführöffnung 46 und die dritte Zuführöffnung 47 auf. Die zweite Zuführöffnung 46 und die dritte Zuführöffnung 47 sind in der Förderrichtung 12 stromabwärts zu der ersten Zuführöffnung 40 angeordnet. Die zweite Zuführöffnung 46 ist in der Förderrichtung 12 stromabwärts zu der dritten Zuführöffnung 47 angeordnet. Alternativ kann die zweite Zuführöffnung 46 in der Förderrichtung 12 stromaufwärts zu der dritten Zuführöffnung 47 angeordnet sein. In der zweiten Zuführzone 37 weisen die Behandlungselementwellen 28, 29 Förderelemente 64, 64' auf.

Die zweite Zuführeinrichtung 4 dient zum Zuführen der Polycarbonat-Schmelze S_{PC} in die Mehrwellen-Schneckenmaschine 2. Hierzu mündet die zweite Zuführeinrichtung 4 in die zweite Zuführöffnung 46. Die zweite Zuführöffnung 46 ist in dem Gehäuse 11, beispielsweise in dem Gehäuseabschnitt 18, ausgebildet. Die zweite Zuführöffnung 46 mündet in die Gehäusebohrungen 26, 27. Die zweite Zuführöffnung 46 ist beispielsweise an einer Oberseite des Gehäuses 11 ausgebildet.

Die zweite Zuführeinrichtung 4 umfasst eine Schmelzepumpe 48 und eine Zuführleitung 49. Die Schmelzepumpe 48 fördert die Polycarbonat-Schmelze S_{PC} direkt von der Herstellungsvorrichtung 6, in der die Polycarbonat-Schmelze S_{PC} hergestellt wird, über die Zuführleitung 49 in die zweite Zuführöffnung 46.

Die Herstellungsvorrichtung 6 dient zum Herstellen der Polycarbonat-Schmelze S_{PC}. Die Herstellung erfolgt insbesondere durch ein phosgenfreies Umesterungsverfahren, bei dem eine Umesterung von Kohlensäureestern mit Dihydroxyverbindungen erfolgt. Bei dem phosgenfreien, direkten und kontinuierlichen Umesterungsverfahren werden die Rohstoffe zunächst zu einer Rohstoffschmelze in einem definierten molaren Verhältnis kontinuierlich vermischt. Die Rohstoffschmelze durchläuft mehrere Umesterungsreaktoren, in denen in mehreren Umesterungsstufen die Rohstoffe zu einer Monomerschmelze umgewandelt werden. In einem Vorkondensationsreaktor wird aus der Monomerschmelze ein Vorpolymer erzeugt. Aus dem Vorpolymer wird mittels mehrerer Polykondensationsreaktoren die Polycarbonat-Schmelze S_{PC} mit einem gewünschten Polymerisationsgrad erzeugt. Das Herstellungsverfahren der Polycarbonat-Schmelze S_{PC} ist bekannt und üblich.

Die dritte Zuführeinrichtung 5 dient zum Zuführen eines zweiten Teils des mindestens einen Additivs A in die Mehrwellen-Schneckenmaschine 2. Hierzu mündet die dritte Zuführeinrichtung 5 in die dritte Zuführöffnung 47. Die dritte Zuführöffnung 47 ist seitlich in dem Gehäuse 11, beispielsweise in dem Gehäuseabschnitt 17, ausgebildet und mündet in die Gehäusebohrungen 26, 27.

Die dritte Zuführeinrichtung 5 umfasst einen zweiten Dosierer 50 und eine Zuführschneckenmaschine 51. Der zweite Dosierer 50 ist gravimetrisch oder volumetrisch ausgebildet. Die Zuführschneckenmaschine 51 ist insbesondere als zweiwellige Seitenbeschickungsmaschine ausgebildet. Die Zuführschneckenmaschine 51 umfasst ein Gehäuse 52, in dem zwei Gehäusebohrungen 53, 54 ausgebildet sind. In den Gehäusebohrungen 53, 54 sind zwei Förderelementwellen 55, 56 angeordnet, die um zugehörige Drehachsen 57, 58 in gleichen Richtungen drehantreibbar sind. Zum Drehantreiben umfasst die Zuführschneckenmaschine 51 einen Antriebsmotor 59 und ein Verzweigungsgetriebe 60. Die Förderelementwellen 55, 56 werden mittels des Antriebsmotors 59 über das Verzweigungsgetriebe 60 in gleichen Drehrichtungen um die Drehachsen 57, 58 drehangetrieben. In dem Gehäuse 52 ist eine Zuführöffnung 61 ausgebildet, in die ein Zuführtrichter 62 mündet. Der zweite Dosierer 50 mündet in den Zuführtrichter 62. Das Gehäuse 52 ist nicht abgeschlossen und bildet eine Beschickungsöffnung 63 aus. Die Beschickungsöffnung 63 mündet in die dritte Zuführöffnung 47. Hierzu ist das Gehäuse 52 an das Gehäuse 11 der Mehrwellen-Schneckenmaschine 2 angeschlossen. Die Förderelementwellen 55, 56 stehen über das Gehäuse 52 über und erstrecken sich in die dritte Zuführöffnung 47.

Die Homogenisierungszone 38 dient zum Vermischen und Homogenisieren des mindestens einen Polymers P bzw. der Polymer-Schmelze Sp mit der Polycarbonat-Schmelze S_{PC} und dem mindestens einen Additiv A. In der Homogenisierungszone 38 umfassen die Behandlungselementwellen 28, 29 in der Förderrichtung 12 nacheinander Knetelemente 65, 65', Förderelemente 66, 66' und Mischelemente 67, 67'. Die Knetelemente 65, 65'umfassen insbesondere Knetblöcke mit mehreren einteilig miteinander verbundenen Knetscheiben und/oder einzelne Knetscheiben. Die Mischelemente 67, 67' umfassen insbesondere Zahnmischelemente und/oder Turbinenmischelemente. Die Mischelemente 67, 67' dienen zum distributiven Vermischen und können fördernd und/oder förderneutral ausgebildet sein. Die Homogenisierungszone 38 erstreckt sich von der zweiten Zuführzone 37 bis zu der Austragszone 39. Die Homogenisierungszone 38 beginnt mit einem in der Förderrichtung 12 ersten Knetelement 65, 65' nach der zweiten Zuführöffnung 46 und endet mit dem letzten Mischelement 67, 67'. Die Homogenisierungszone 38 hat in der Förderrichtung 12 eine Länge L_{H}. Für ein Verhältnis L_{H}/D gilt insbesondere: 4 ≤ L_{H}/D ≤ 16, insbesondere 5 ≤ L_{H}/D ≤ 15, und insbesondere 6 ≤ L_{H}/D ≤ 14.

Die Homogenisierungszone 38 dient ferner zum Entgasen der Polymer-Schmelze Sp und der Polycarbonat-Schmelze S_{PC} bzw. der daraus hergestellten Polymer-Zusammensetzung C. Hierzu weist die Mehrwellen-Schneckenmaschine 2 eine Schleppmittel-Zuführöffnung 68 und eine zugehörige Schleppmittel-Zuführeinrichtung 69 auf. Die Schleppmittel-Zuführöffnung 68 ist in der Förderrichtung 12 stromabwärts zu der zweiten Zuführöffnung 46 in der Homogenisierungszone 38 in dem Gehäuse 11, beispielsweise in dem Gehäuseabschnitt 19, ausgebildet. Die Schleppmittel-Zuführöffnung 68 mündet in die Gehäusebohrungen 26, 27. An die Schleppmittel-Zuführöffnung 68 ist zum Zuführen eines Schleppmittels S_{M} die Schleppmittel-Zuführeinrichtung 69 angeschlossen. Die Schleppmittel-Zuführeinrichtung 69 umfasst einen Behälter 70, der über eine Pumpe 71 und eine Zuführleitung 72 an die Schleppmittel-Zuführöffnung 68 angeschlossen ist.

Zum Entgasen umfasst die Mehrwellen-Schneckenmaschine 2 eine Entgasungsöffnung 73 und eine zugehörige Entgasungseinrichtung 74. Die Entgasungsöffnung 73 ist in der Förderrichtung 12 stromabwärts zu der Schleppmittel-Zuführöffnung 68 in dem Gehäuse 11 ausgebildet. Die Entgasungsöffnung 73 ist seitlich in dem Gehäuse 11, beispielsweise in dem Gehäuseabschnitt 20, ausgebildet. Die Entgasungseinrichtung 74 ist an die Entgasungsöffnung 73 angeschlossen.

Die Entgasungseinrichtung 74 umfasst eine Entgasungsschneckenmaschine 75 und einen Unterdruckerzeuger 76. Die Entgasungsschneckenmaschine 75 ist insbesondere als zweiwellige Seitenentgasungsmaschine ausgebildet. Die Entgasungsschneckenmaschine 75 umfasst ein Gehäuse 77, in dem zwei einander durchdringende Gehäusebohrungen 78, 79 ausgebildet sind. Die Gehäusebohrungen 78, 79 haben im Querschnitt die Form einer liegenden Acht. In den Gehäusebohrungen 78, 79 sind zwei Förderelementwellen 80, 81 angeordnet, die um zugehörige Drehachsen 82, 83 in gleichen Drehrichtungen drehantreibbar sind. Zum Drehantreiben umfasst die Entgasungsschneckenmaschine 75 einen Antriebsmotor 84 und ein Verzweigungsgetriebe 85. Die Förderelementwellen 80, 81 werden mittels des Antriebsmotors 84 über das Verzweigungsgetriebe 85 in gleichen Drehrichtungen um die Drehachsen 82, 83 drehangetrieben. In dem Gehäuse 77 ist eine Absaugöffnung 86 ausgebildet. Der Unterdruckerzeuger 76 ist an die Absaugöffnung 86 angeschlossen. Das Gehäuse 77 ist nicht abgeschlossen und bildet eine Verbindungsöffnung 87 aus. Die Verbindungsöffnung 87 mündet in die Entgasungsöffnung 73. Hierzu ist das Gehäuse 77 an das Gehäuse 11 der Mehrwellen-Schneckenmaschine 2 angeschlossen. Die Förderelementwellen 80, 81 erstrecken sich durch die Verbindungsöffnung 87 in die Entgasungsöffnung 73 hinein.

Am Ende der Homogenisierungszone 38 ist die Polymer-Schmelze S_{P}, die Polycarbonat-Schmelze S_{PC} und das mindestens eine Additiv A zu der Polymer-Zusammensetzung C vermischt und homogenisiert.

Die Austragszone 39 dient zum Austragen der erzeugten Polymer-Zusammensetzung C. In der Austragszone 39 umfassen die Behandlungselementwellen 28, 29 Förderelemente 88, 88'. Die Förderelemente 88, 88' dienen zum Austragen der Polymer-Zusammensetzung C durch die Austragsöffnung 25.

Die Behandlungselementwellen 28, 29 haben in der Förderrichtung 12 eine Gesamtlänge L. Für ein Verhältnis L/D gilt insbesondere: 10 ≤ L/D ≤ 52, insbesondere 14 ≤ L/D ≤ 40, und insbesondere 16 ≤ L/D ≤ 36.

Nach der Mehrwellen-Schneckenmaschine 2 sind in der Förderrichtung 12 nacheinander die Druckaufbaueinrichtung 7, die Filtereinrichtung 8 und die Granuliereinrichtung 9 angeordnet. Die Druckaufbaueinrichtung 7 dient zur Erhöhung des Drucks der Polymer-Zusammensetzung C, so dass diese durch die Filtereinrichtung 8 gefördert werden kann. Die Druckaufbaueinrichtung 7 umfasst beispielsweise eine Schmelzepumpe. Die Filtereinrichtung 8 umfasst mindestens ein Filterelement 89 zum Filtern der schmelzeförmigen Polymer-Zusammensetzung C. Vorzugsweise ist die Filtereinrichtung 8 als Wechseleinrichtung mit mindestens zwei Filterelementen ausgebildet. In der Granuliereinrichtung 9 wird die gefilterte Polymer-Zusammensetzung C zu Granulat G granuliert. Der Aufbau der Granuliereinrichtung 9 ist bekannt und üblich.

Die Steuereinrichtung 10 dient zum Steuern der Aufbereitungsanlage 1 und ist insbesondere in Signalverbindung mit der Mehrwellen-Schneckenmaschine 2, den Zuführeinrichtungen 3 bis 5, der Druckaufbaueinrichtung 7, der Filtereinrichtung 8 und der Granuliereinrichtung 9.

Die Funktionsweise der Aufbereitungsanlage 1 ist wie folgt:
Die erste Zuführeinrichtung 3 dosiert das mindestens eine Polymer P und den ersten Teil des mindestens einen Additivs A in den Zuführtrichter 43. Das mindestens eine Polymer P und der erste Teil des mindestens einen Additivs A gelangen durch die erste Zuführöffnung 40 in die erste Zuführzone 35 der Mehrwellen-Schneckenmaschine 2. Das mindestens eine Polymer P wird als Schüttgut, also als Granulat und/oder Pulver, in die Mehrwellen-Schneckenmaschine 2 zugeführt.

Das mindestens eine Polymer P ist insbesondere ausgewählt aus der Gruppe Acrylnitril-Butadien-Styrol (ABS), Styrol-Acrylnitril (SAN), Polyethylenterephthalat (PET) und Polybutylenterephthalat (PBT). Das mindestens eine Polymer P ist nicht Polycarbonat.

Für einen Anteil w_{P} des mindestens einen Polymers P bezogen auf die Polymer-Zusammensetzung C gilt insbesondere: 10 Gew.-% ≤ w_{P} ≤ 70 Gew.-%, insbesondere 20 Gew.-% ≤ w_{P} ≤ 60 Gew.-%, und insbesondere 30 Gew.-% ≤ w_{P} ≤ 50 Gew.-%.

In der ersten Zuführzone 35 wird das mindestens eine Polymer P und der erste Teil des mindestens einen Additivs A in der Förderrichtung 12 in die Aufschmelzzone 36 gefördert. In der Aufschmelzzone 36 wird das mindestens eine Polymer P zu der Polymer-Schmelze S_{P} aufgeschmolzen. Am Ende der Aufschmelzzone 36 ist beispielsweise ein Anteil von mindestens 30 Gew.-%, insbesondere von mindestens 50 Gew.-%, und insbesondere von mindestens 70 Gew.-% des mindestens einen Polymers P aufgeschmolzen.

In der zweiten Zuführzone 37 wird zunächst der zweite Teil des mindestens einen Additivs A mittels der dritten Zuführeinrichtung 5 in die Mehrwellen-Schneckenmaschine 2 bzw. dem mindestens einen aufgeschmolzenen Polymer P zugeführt. Hierzu wird der zweite Teil des mindestens einen Additivs A mittels des zweiten Dosierers in den Zuführtrichter 62 und durch die Zuführöffnung 61 in die Zuführschneckenmaschine 51 zugeführt. Mittels der Förderelementwellen 55, 56 wird der zweite Teil des mindestens einen Additivs A durch die Beschickungsöffnung 63 und die dritte Zuführöffnung 47 in die Mehrwellen-Schneckenmaschine 2 zugeführt.

Das mindestens eine Additiv A ist insbesondere ausgewählt aus der Gruppe UV-Stabilisator, Wärme-Stabilisator, Sauerstofffänger, Trennmittel (Mold Release: MR), Farbstoff und Füllstoff. Als Füllstoff dient/dienen insbesondere Talkum und/oder Fasern, wie beispielsweise Glasfasern und/oder Kohlefasern.

Ist das mindestens eine Additiv A ausgewählt aus der Gruppe UV-Stabilisator, Wärme-Stabilisator, Sauerstofffänger, Trennmittel (Mold Release: MR) und Farbstoff, so gilt für einen Anteil w_{A} des mindestens einen Additivs A bezogen auf die Polymer-Zusammensetzung C insbesondere: 0,0001 Gew.-% ≤ w_{A} ≤ 2,5 Gew.-%, insbesondere 0,0005 Gew.-% ≤ w_{A} ≤ 1,5 Gew.-%, und insbesondere 0,0005 Gew.-% ≤ w_{A} ≤ 1 Gew.-%.

Ist das mindestens eine Additiv A ein Füllstoff, so gilt für einen Anteil w_{A} des mindestens einen Additivs A bezogen auf die Polymer-Zusammensetzung C insbesondere: 1 Gew.-% ≤ w_{A} ≤ 80 Gew.-%, insbesondere 10 Gew.-% ≤ w_{A} ≤ 70 Gew.-%, und insbesondere 20 Gew.-% ≤ w_{A} ≤ 40 Gew.-%.

Ferner wird in der zweiten Zuführzone 37 die Polycarbonat-Schmelze S_{PC} mittels der zweiten Zuführeinrichtung 4 durch die zweite Zuführöffnung 46 in die Mehrwellen-Schneckenmaschine 2 zugeführt. Die Polycarbonat-Schmelze S_{PC} wird der Mehrwellen-Schneckenmaschine 2 mittels der zweiten Zuführeinrichtung 4 kontinuierlich zugeführt. Die Polycarbonat-Schmelze S_{PC} hat beim Zuführen eine Temperatur T_{PC}, wobei insbesondere gilt: 270°C ≤ T_{PC} ≤ 330°C, insbesondere 280°C ≤ T_{PC} ≤ 320°C, und insbesondere 290°C ≤ T_{PC} ≤ 310°C. Aufgrund der Temperatur T_{PC} der Polycarbonat-Schmelze S_{PC} wird das restliche, noch nicht aufgeschmolzene mindestens eine Polymer P vollständig aufgeschmolzen.

Für einen Anteil w_{PC} der Polycarbonat-Schmelze S_{PC} bezogen auf die Polymer-Zusammensetzung C gilt insbesondere: 30 Gew.-% ≤ w_{PC} ≤ 90 Gew.-%, insbesondere 40 Gew.-% ≤ w_{PC} ≤ 80 Gew.-% und insbesondere 50 Gew.-% ≤ w_{PC} ≤ 70 Gew.-%.

Die Polycarbonat-Schmelze S_{PC} wird direkt aus der Herstellungsvorrichtung 6 über die Schmelzepumpe 48 und die Zuführleitung 49 in die Mehrwellen-Schneckenmaschine 2 zugeführt. Mittels der Förderelemente 64, 64' werden die Polymer-Schmelze S_{P}, die Polycarbonat-Schmelze S_{PC} und das mindestens eine Additiv A zu der Homogenisierungszone 38 gefördert.

In der Homogenisierungszone 38 werden die Polymer-Schmelze S_{P}, die Polycarbonat-Schmelze S_{PC} und das mindestens eine Additiv A miteinander vermischt und homogenisiert. Während des Homogenisierens werden die Polymer-Schmelze S_{P} und die Polycarbonat-Schmelze S_{PC} entgast. Zum Entgasen wird in der Homogenisierungszone 38 zunächst das Schleppmittel S_{M} mittels der Schleppmittel-Zuführeinrichtung 69 durch die Schleppmittel-Zuführöffnung 68 in die Mehrwellen-Schneckenmaschine 2 zugeführt. Das Schleppmittel S_{M} ist beispielsweise Wasser. Durch das Schleppmittel S_{M} werden flüchtige Bestandteile in der Polymer-Schmelze S_{P} und der Polycarbonat-Schmelze S_{PC} gelöst. Die flüchtigen Bestandteile werden mittels der Entgasungseinrichtung 74 über die Entgasungsöffnung 73 aus den Gehäusebohrungen 26, 27 abgesaugt. Das Absaugen der flüchtigen Bestandteile erfolgt über die Entgasungsöffnung 73, die Gehäusebohrungen 78, 79 und die Absaugöffnung 86. Die Förderelementwellen 80, 81 gewährleisten hierbei, dass die Polymer-Schmelze S_{P} und die Polycarbonat-Schmelze S_{PC} sowie das mindestens eine Additiv A in den Gehäusebohrungen 26, 27 verbleiben. Am Ende der Homogenisierungszone 38 sind die Polymer-Schmelze S_{P}, die Polycarbonat-Schmelze S_{PC} und das mindestens eine Additiv A homogen miteinander vermischt und entgast, so dass die Polymer-Zusammensetzung C mit einer hohen Qualität vorliegt.

In der Austragszone 39 wird die Polymer-Zusammensetzung C durch die Austragsöffnung 25 der Austragsplatte 24 ausgetragen. Anschließend wird mittels der Druckaufbaueinrichtung 7 der Druck der Polymer-Zusammensetzung C erhöht, so dass diese durch die Filtereinrichtung 8 gedrückt und gefiltert wird. Anschließend wird die gefilterte Polymer-Zusammensetzung C mittels der Granuliereinrichtung 9 in üblicher Weise zu Granulat G granuliert.

Dadurch, dass die Polycarbonat-Schmelze S_{PC} direkt aus der Herstellungsvorrichtung 6 der Mehrwellen-Schneckenmaschine 2 zugeführt wird, ist das Aufbereiten der Polymer-Zusammensetzung C energieeffizient. Das Homogenisieren der Polymer-Schmelze S_{P} mit der Polycarbonat-Schmelze S_{PC} und dem mindestens einen Additiv A ermöglicht ein einfaches und flexibles Aufbereiten der Polymer-Zusammensetzung C mit einer hohen Qualität. Mittels der Mehrwellen-Schneckenmaschine 2 kann das Homogenisieren wesentlich einfacher und effektiver erfolgen als mittels eines statischen Mischers, wie dies aus dem Stand der Technik bekannt ist. Insbesondere kann während des Homogenisierens ein Entgasen erfolgen, wodurch die Qualität der Polymer-Zusammensetzung C verbessert wird.

Die Herstellungsvorrichtung 6 kann mehrere Herstellungslinien für Polycarbonat-Schmelzen S_{PC} umfassen, wobei jeder Herstellungslinie eine Mehrwellen-Schneckenmaschine 2 mit Zuführeinrichtungen 3 bis 5, einer Druckaufbaueinrichtung 7, einer Filtereinrichtung 8 und einer Granuliereinrichtung 9 zugeordnet sein kann. Hierdurch können beispielsweise verschiedene Polymer-Zusammensetzungen C mit unterschiedlichen Polymeren P und/oder unterschiedlichen Additiven A und/oder unterschiedlichen Polycarbonat-Schmelzen S_{PC} hergestellt werden.

## Patentansprüche

1. Verfahren zum Aufbereiten einer Polymer-Zusammensetzung, die Polycarbonat und mindestens ein Polymer und/oder mindestens ein Additiv umfasst, mit den Schritten:
- Bereitstellen einer Aufbereitungsanlage (1) mit einer Schneckenmaschine (2), die eine erste Zuführöffnung (40) zum Zuführen des mindestens einen Polymers (P) und/oder des mindestens einen Additivs (A) und eine zweite Zuführöffnung (46) zum Zuführen einer Polycarbonat-Schmelze (S_{PC}) umfasst,
- Zuführen des mindestens einen Polymers (P) und/oder des mindestens einen Additivs (A) durch die erste Zuführöffnung (40) in die Schneckenmaschine (2),
- Zuführen der Polycarbonat-Schmelze (S_{PC}) durch die zweite Zuführöffnung (46) in die Schneckenmaschine (2),
- Homogenisieren des mindestens einen Polymers (P) und/oder des mindestens einen Additivs (A) und der Polycarbonat-Schmelze (S_{PC}) mittels der Schneckenmaschine (2) zu der Polymer-Zusammensetzung (C), und
- Austragen der Polymer-Zusammensetzung (C) aus der Schneckenmaschine (2).

2. Verfahren nach Anspruch 1, **dadurch gekennzeichnet,**
**dass** das mindestens eine Polymer (P) als Schüttgut in die Schneckenmaschine (2) zugeführt und in der Schneckenmaschine (2) aufgeschmolzen wird.

3. Verfahren nach Anspruch 1 oder 2, **dadurch gekennzeichnet, dass** das mindestens eine Polymer (P) und/oder das mindestens eine Additiv (A) mittels einer ersten Zuführeinrichtung (3) in die Schneckenmaschine (2) zugeführt wird.

4. Verfahren nach mindestens einem der vorangegangenen Ansprüche, **dadurch gekennzeichnet,**
**dass** die Polycarbonat-Schmelze (S_{PC}) mittels einer zweiten Zuführeinrichtung (4) in die Schneckenmaschine (2) zugeführt wird.

5. Verfahren nach mindestens einem der vorangegangenen Ansprüche, **dadurch gekennzeichnet,**
**dass** die Polycarbonat-Schmelze (S_{PC}) aus einer Herstellungsvorrichtung (6) in die Schneckenmaschine (2) zugeführt wird.

6. Verfahren nach mindestens einem der vorangegangenen Ansprüche, **dadurch gekennzeichnet,**
**dass** das zumindest teilweise aufgeschmolzene mindestens eine Polymer (P) und/oder die Polycarbonat-Schmelze (S_{PC}) mittels der Schneckenmaschine (2) entgast wird.

7. Verfahren nach mindestens einem der vorangegangenen Ansprüche, **dadurch gekennzeichnet,**
**dass** zumindest ein Teil des mindestens einen Additivs (A) durch eine dritte Zuführöffnung (47) in die Schneckenmaschine (2) zugeführt wird.

8. Aufbereitungsanlage zum Aufbereiten einer Polymer-Zusammensetzung, die Polycarbonat und mindestens ein Polymer und/oder mindestens ein Additiv umfasst, mit
- einer Schneckenmaschine (2), die eine erste Zuführöffnung (40) zum Zuführen des mindestens einen Polymers (P) und/oder des mindestens einen Additivs (A) umfasst,
**dadurch gekennzeichnet,**
**dass** die Schneckenmaschine (2) eine zweite Zuführöffnung (46) zum Zuführen einer Polycarbonat-Schmelze (S_{PC}) umfasst, und
**dass** die Schneckenmaschine (2) eine Homogenisierungszone (38) zum Homogenisieren des mindestens einen Polymers (P) und/oder des mindestens einen Additivs (A) und der Polycarbonat-Schmelze (S_{PC}) zu der Polymer-Zusammensetzung (C) umfasst.

9. Aufbereitungsanlage nach Anspruch 8, **dadurch gekennzeichnet, dass** die Schneckenmaschine (2) eine Aufschmelzzone (36) zum zumindest teilweisen Aufschmelzen des mindestens einen Polymers (P) umfasst.

10. Aufbereitungsanlage nach Anspruch 8 oder 9, **dadurch gekennzeichnet,**
**dass** die Schneckenmaschine (2) eine Entgasungseinrichtung (74) zum Entgasen des zumindest teilweise aufgeschmolzenen mindestens einen Polymers (P) und/oder der Polycarbonat-Schmelze (S_{PC}) umfasst.

11. Aufbereitungsanlage nach mindestens einem der Ansprüche 8 bis 10, **gekennzeichnet**
**durch** eine erste Zuführeinrichtung (3) zum Zuführen des mindestens einen Polymers (P) und/oder des mindestens einen Additivs (A) durch die erste Zuführöffnung (40) in die Schneckenmaschine (2).

12. Aufbereitungsanlage nach mindestens einem der Ansprüche 8 bis 11, **gekennzeichnet**
**durch** eine zweite Zuführeinrichtung (4) zum Zuführen der Polycarbonat-Schmelze (S_{PC}) durch die zweite Zuführöffnung (46) in die Schneckenmaschine (2).

13. Aufbereitungsanlage nach mindestens einem der Ansprüche 8 bis 12, **gekennzeichnet**
**durch** eine Herstellungsvorrichtung (6) zur Herstellung der Polycarbonat-Schmelze (S_{PC}).

14. Aufbereitungsanlage nach mindestens einem der Ansprüche 8 bis 13, **gekennzeichnet**
**durch** eine dritte Zuführeinrichtung (5) zum Zuführen zumindest einen Teils des mindestens einen Additivs (A) durch eine dritte Zuführöffnung (47) in die Schneckenmaschine (2).

15. Aufbereitungsanlage nach mindestens einem der Ansprüche 8 bis 14, **dadurch gekennzeichnet,**
**dass** die Schneckenmaschine (2) mindestens eine Behandlungselementwelle (28, 29) mit einer Länge L und einem Außendurchmesser D umfasst, wobei für ein Verhältnis L/D gilt: 10 ≤ L/D ≤ 52, insbesondere 14 ≤ L/D ≤ 40, und insbesondere 16 ≤ L/D ≤ 36.
